# EUROPEAN PATENT APPLICATION

(11) **EP 4 524 105 A2**
(43) Date of publication of application: **19.03.2025**
(21) Application number: 24200718.5
(22) Date of filing: 17.09.2024
(51) Int. Cl.: C01D 15/00, H01M 10/052

(54) **METHOD OF PREPARING LITHIUM SULFIDE**

(30) Priority: 18.09.2023 KR 20230124026
(71) Applicant: SK Innovation Co., Ltd., Seoul 03188 (KR)
(72) Inventor: HONG, Suk Joon, 34124 Daejeon (KR); CHOI, Min June, 34124 Daejeon (KR); KIM, Ji Min, 34124 Daejeon (KR); CHOI, Wan Uk, 34124 Daejeon (KR); CHOI, Je Nam, 34124 Daejeon (KR)
(74) Representative: Thoma, Michael

(57) **Abstract**

In a method of preparing lithium sulfide, a solid sulfur layer, a catalyst layer and a lithium source layer are sequentially arranged in a reactor. A reaction gas is injected into the reactor in a single direction. The reaction gas sequentially passes through the solid sulfur layer, the catalyst layer and the lithium source layer to obtain a high-purity lithium sulfide.

## Description

### TECHINICAL FIELD

The embodiments of the present disclosure generally relate to a method of preparing lithium sulfide. More particularly, the embodiments of the present disclosure relate to a method of preparing a high-purity lithium sulfide.

### BACKGROUND

A secondary battery which can be charged and discharged repeatedly has been widely employed as a power source for mobile electronic devices such as camcorders, mobile phones, laptop computers, and the like, and also as a power source for electric automobiles, hybrid vehicles, and the like. Lithium secondary batteries among the various types of secondary batteries are being actively developed due to their high operational voltage, energy density per unit weight, charging rate, and compact dimension.

All-solid batteries using solid electrolyte do not contain flammable liquid electrolyte for improved safety. Additionally, the energy density and life-span of all-solid batteries may be higher than those of a conventional secondary batteries using the liquid electrolyte.

Sulfide-based solid electrolytes are known and generally exhibit high lithium ion conductivity and high safety in a wide voltage range. The sulfide-based solid electrolyte may be present in the form of Li₂S-P₂S₅, Li₂S-P₂S₅-LiCl, and may be prepared from lithium sulfide.

However, lithium sulfide is not produced from natural minerals, and thus requires a synthetic process to raise productivity and cost issues.

Especially, in the preparation of lithium sulfide, when a metallic lithium is used as a lithium source, the overall process cost is increased. When lithium hydroxide is used as the lithium source, reaction efficiency is lowered and/or side reactions may occur. Further, hydrogen sulfide (H₂S) as a sulfur source is toxic. Thus, an improved process for more efficiently preparing high-purity lithium sulfide would be highly desirable in the industry.

### SUMMARY

According to an embodiment of the present disclosure, there is provided a method of preparing lithium sulfide having enhanced efficiency and purity.

In a method of preparing lithium sulfide, a solid sulfur layer, a catalyst layer and a lithium source layer are sequentially arranged in the reactor. A reaction gas is injected into the reactor in a single direction. The reaction gas may sequentially pass through the solid sulfur layer, the catalyst layer and the lithium source layer.

In some embodiments, the reaction gas may be injected into one end portion of the reactor and sequentially may pass through the solid sulfur layer, the catalyst layer and the lithium source layer.

In some embodiments, lithium sulfide may be collected from the other end portion of the reactor.

In some embodiments, the catalyst layer may include an active metal and a support for the active metal.

In some embodiments, the support may include alumina, and the active metal may include at least one of Ni, Mo, Co and W.

In some embodiments, the lithium source layer may include at least one of lithium hydroxide and lithium oxide.

In some embodiments, a lithium source included in the lithium source layer may be recovered from a waste cathode material of a lithium secondary battery.

In some embodiments, a ratio of the total number of moles of lithium atoms included in the lithium source layer relative to the total number of moles of sulfur atoms included in the solid sulfur layer may be in a range from 1 to 3.

In some embodiments, the reaction gas may include hydrogen or a hydrogen-nitrogen mixture gas.

In some embodiments, the reaction gas may include a hydrogen-nitrogen mixture gas, and a volume ratio of hydrogen in the hydrogen-nitrogen mixture gas may be in a range from 30 vol% or more and less than 100 vol%.

In some embodiments, a reaction temperature in the reactor may be in a range from 300°C to 500°C.

In some embodiments, a reaction pressure in the reactor may be in a range from 0.1 bar to 5 bar.

In some embodiments, a reactor may include a first reactor and a second reactor.

In some embodiments, the solid sulfur layer and the catalyst layer may be disposed in the above first reactor, and the lithium source layer may be disposed in the second reactor. The reaction gas may be supplied from the first reactor to the second reactor to sequentially contact the solid sulfur layer, the catalyst layer and the lithium source layer.

In some embodiments, the reactor may include a first reactor, a second reactor and a third reactor.

In some embodiments, the solid sulfur layer may be disposed in the first reactor, the catalyst layer may be disposed in the second reactor, and the lithium source layer may be disposed in the third reactor. The reaction gas may be supplied from the first reactor to the second reactor and the third reactor to sequentially contact the solid sulfur layer, the catalyst layer and the lithium source layer.

In some embodiments, a solid sulfur layer, a catalyst layer and a lithium source layer may be sequentially arranged in a reactor. A reactor system comprising a catalyst layer disposed between a solid sulfur layer and a lithium source layer may be provided. A reaction gas may be fed first into the solid sulfur layer to pass through the solid sulfur layer, then through the catalyst layer, and after exiting the catalyst layer to pass through the lithium source layer to produce lithium sulfide. The lithium sulfide may be separated. The the separated lithium sulfide may be collected.

According to the above-described embodiments, a solid sulfur layer, a catalyst layer and a lithium source layer may be sequentially disposed in one or more reactors, and a reaction gas may be injected in a single direction (an omni-direction) to sequentially contact the layers, thereby generate a high-purity lithium sulfide under mild conditions.

In some embodiments, lithium hydroxide or lithium oxide generated during a process of treating a waste battery may be used as the lithium source to implement an eco-friendly and low cost production process of the high-purity lithium.

In some embodiments, a solid sulfur may be obtained from by-products generated after a refinery treatment and may be easily controlled, thereby implementing an eco-friendly and efficient production process of lithium sulfide. Further, lithium sulfide may be prepared while an operator avoids direct contact with a hazardous gas.

In some embodiments, the purity of lithium sulfide may be improved without using an additional solvent or without an additional purification by including the catalyst layer.

### BRIEF DESCRIPTION OF THE DRAWINGS

FIG. 1 is a schematic process flow chart of a method of preparing lithium sulfide in accordance with embodiments of the present disclosure.
FIG. 2 is a schematic process flow chart of a method of preparing lithium sulfide in accordance with embodiments of the present disclosure.
FIGS. 3 and 4 are schematic process flow-charts for describing a method of preparing lithium sulfide in accordance with embodiments of the present disclosure.

### DETAILED DESCRIPTION OF THE EMBODIMENTS

Embodiments of the present disclosure provide a method for preparing lithium sulfide with high purity and high yield using solid sulfur, a catalyst and a lithium source

Hereinafter, some embodiments of the present disclosure will be described in detail with reference to the attached drawings.

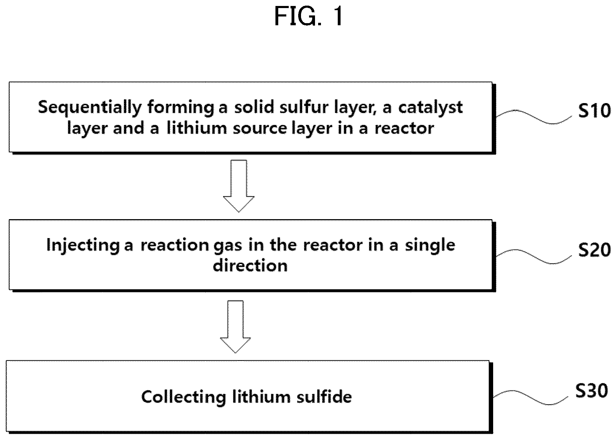

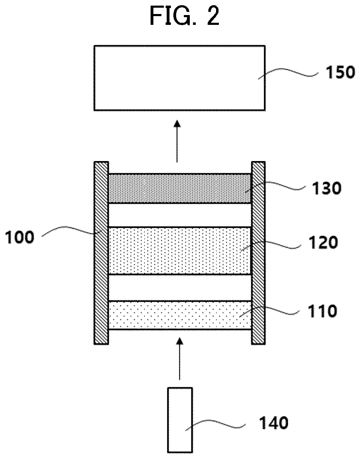

FIG. 1 is a schematic process flow chart of a method of preparing lithium sulfide in accordance with embodiments of the present disclosure. FIG. 2 is a schematic process flow chart of a method of preparing lithium sulfide in accordance with embodiments of the present disclosure.

Referring to FIG. 1, a solid sulfur layer, a catalyst layer and a lithium source layer may be sequentially disposed inside a reactor (e.g., in an operation of S 10).

Referring to FIG. 2, reactor 100 may include a solid sulfur layer 110, a catalyst layer 120 and a lithium source layer 130. The reactor 100 may be operatively connected with a gas supplier 140 and a lithium sulfide collector 150.

The solid sulfur layer 110, the catalyst layer 120 and the lithium source layer 130 may be sequentially disposed within the reactor 100 to fill the inside of the reactor 100. In operation, a reaction gas may sequentially pass through the solid sulfur, the catalyst and the lithium source layers 110, 120, and 130 according to the arranged order.

A shape in which the solid sulfur layer 110, the catalyst layer 120 and the lithium source layer 130 are disposed is not particularly limited. For example, in an embodiment, the solid sulfur layer 110, the catalyst layer 120 and the lithium source layer 130 may be disposed in separated spaces. In another embodiment, the solid sulfur layer 110, the catalyst layer 120 and the lithium source layer 130 may be disposed in a separated state by a separator in the same space.

In some embodiments, at least two layers of the solid sulfur layer 110, the catalyst layer 120 and the lithium source layer 130 may contact each other.

In an embodiment, the solid sulfur layer 110 and the catalyst layer 120 may contact each other, and the lithium source layer 130 may be spaced apart therefrom. In an embodiment, the catalyst layer 120 and the lithium source layer 130 may contact each other, and the solid sulfur layer 110 may be spaced apart therefrom.

In an embodiment, the solid sulfur layer 110, the catalyst layer 120 and the lithium source layer 130 may be spaced apart from each other. In this case, a flow of the reaction gas may be promoted by increase of sequential contact with the layers, and lithium sulfide may be efficiently prepared, in an economic, environmentally optimal manner with high yield and purity.

After the solid sulfur layer 110, the catalyst layer 120 and the lithium source layer 130 are sequentially disposed, the reaction gas may be injected in a single direction (in an omni-direction) (e.g., in an operation of S20).

In some embodiments, the reaction gas may be injected into one end portion of the reactor 100 to sequentially pass through the solid sulfur layer 110, the catalyst layer 120 and the lithium source layer 130.

The reaction gas may be injected in one direction from the gas supplier 140 to generate a unidirectional flow.

For example, if the reaction gas is injected in both directions of the reactor 100 (e.g., from the solid sulfur layer to the lithium source layer and from the lithium source layer to the solid sulfur layer), a gas flow may not be substantially generated or a gas residence period may be increased to degrade the purity of the produced lithium sulfide.

When the reaction gas does not sequentially pass through the solid sulfur layer 110, the catalyst layer 120 and the lithium source layer 130, lithium sulfide may not be produced or the yield and/or purity of the produced lithium sulfide may be significantly reduced.

For example, when the solid sulfur layer 110, the lithium source layer 130 and the catalyst layer 120 are sequentially arranged and the reaction gas sequentially passes through the solid sulfur layer 110, the lithium source layer 130 and the catalyst layer 120, lithium sulfide having a low purity may be prepared or impurities may be generated due to side reactions. For example, when the lithium source layer 130, the catalyst layer 120 and the solid sulfur layer 110 are sequentially disposed, and the reaction gas sequentially passes through the lithium source layer 130, the catalyst layer 120 and the solid sulfur layer 110, the reaction may not occur and lithium sulfide may not be substantially produced.

For example, when the catalyst layer 120 is not disposed, an injection rate of the reaction gas may be decreased and impurities may be generated.

The reaction gas may be injected into the reactor 100 in a single direction, and lithium sulfide may be collected from the other end portion of the reactor 100 (e.g., in an operation of S30).

The reaction gas may be injected into the reactor 100 in the single direction to obtain the high-purity lithium sulfide at the other end portion of the reactor 100.

For example, the other end portion may be connected to the reactor 100 or may be separated from the reactor. In an embodiment, the other end may be connected to the reactor 100 through a pipe. In an embodiment, the other end portion may be integral with the reactor 100.

The other end portion may include a lithium sulfide collector 150. The lithium sulfide collector 150 may be positioned at an opposite side to the gas supplier 140 with the solid sulfur layer 110, the catalyst layer 120 and the lithium source layer 130 disposed in the reactor 100 interposed therebetween.

In some embodiments, the lithium sulfide collector 150 may be located at the opposite side to the gas supplier 140. The reaction gas may sequentially pass through the solid sulfur layer 110, the catalyst layer 120, and the lithium source layer 130 so that lithium sulfide formed by a gas phase synthesis may be obtained from the lithium sulfide collector 150. The reaction gas may be injected in the single direction to obtain lithium sulfide from the lithium sulfide collector 150 rather than at the inside of the reactor 100.

In some embodiments, the solid sulfur layer 110 may be disposed in the reactor 100 so that the reaction gas may pass through the solid sulfur layer 110 in advance. A shape, a particle size, a particle distribution, etc., of the solid sulfur included in the solid sulfur layer 110 may not be specifically limited.

For example, the solid sulfur may include sulfur manufactured in a desulfurization process of petroleum, crude oil, etc. For example, the desulfurization process may include a wet desulfurization using a physical absorbance treatment through sodium hydroxide, polyethylene glycol, potassium carbonate, ferrous chloride, and the like; a dry desulfurization using a chemical adsorption through an adsorbent such as silica gel; a biological desulfurization using sulfur oxidizing bacteria such as thiobacillus, etc.

An eco-friendly and low-cost preparation process of lithium sulfide may be implemented using the solid sulfur produced as a by-product in the desulfurization process. Additionally, the solid sulfur may be easily controlled and sequentially disposed in the reactor, and generation of a hazardous gas may be decreased in the preparation process of lithium sulfide.

In some embodiments, the catalyst layer 120 may include a support and an active metal supported by the support.

In some embodiments, the catalyst layer 120 may include a hydrogen-treated catalyst.

For example, the catalyst layer 120 may include alumina, magnesia, zirconia, silica, and the like, as the support.

For example, the catalyst layer 120 may include at least one selected from a group consisting of Ni, Co, Fe, Mo, Cu, V and W as the active metal supported by the support.

In various embodiments, the support may include alumina, and the active metal may include at least one of Ni, Co, Mo and W.

In various embodiments, the active metal may include NiMo, CoMo or NiW.

The catalyst may include at least one of Ni, Mo, Co and W as the active metal, so that the injected reaction gas may contact the catalyst layer 120 to promote a continuous flow. Accordingly, the reaction gas may contact and react with the lithium source.

In some embodiments, the lithium source may include at least one of lithium hydroxide and lithium oxide.

Lithium hydroxide and lithium oxide may be present independently or in a mixed state in the lithium source layer 130. For example, a lithium hydroxide powder and/or a lithium oxide powder may be used. An average particle diameter of the powder or the lithium oxide powder may be 2 mm or less.

In some embodiments, a lithium source recovered from a waste cathode material may be used as the lithium source included in the lithium source layer 130.

For example, the lithium source may be obtained by preparing a waste cathode active material mixture from the waste cathode material, reacting the waste cathode active material mixture with a reaction gas to form a preliminary precursor mixture, and selectively recovering a lithium precursor.

For example, the waste cathode material may include a cathode current collector (e.g., aluminum (Al)) and a cathode active material layer, and the cathode active material layer may include a cathode active material, a conductive material and a binder.

The conductive material may include, e.g., a carbon-based material such as graphite, carbon black, graphene, carbon nanotube, and the like. The binder may include a resin material such as vinylidene fluoride-hexafluoropropylene copolymer (PVDF-co-HFP), polyvinylidene fluoride (PVDF), polyacrylonitrile, polymethylmethacrylate, etc.

For example, the waste cathode material may be pulverized to form the waste cathode active material mixture. The waste cathode active material mixture may be heat-treated, and impurities contained in the cathode active material mixture may be removed or reduced. Accordingly, the purity of the preliminary precursor mixture may be improved, and thus, the purity of the recovered lithium precursor may also be improved.

For example, the reaction gas reacting with the waste cathode active material mixture may include a reductive gas. The preliminary precursor mixture may include, for example, lithium hydroxide, lithium oxide, a transition metal, a transition metal oxide, and the like.

The lithium precursor may be recovered by washing the preliminary precursor mixture with water, and the lithium precursor may be separated from the transition metal by the washing treatment to be recovered in advance. The lithium precursor may include lithium hydroxide or a hydrate thereof.

The recovered lithium precursor may be crystallized, for example, by a dry process.

As described above, the material recovered from the waste cathode material may be used as the lithium source. Accordingly, an eco-friendly lithium sulfide preparation process may be implemented.

In some embodiments, the reactor 100 may include a reactor capable of injecting the reaction gas in the desired single direction. For example, the reactor 100 may include a tubular reactor, a top reactor, a stirring bath reactor, a fluidized bed reactor, and the like.

In various embodiments, the reactor 100 may include a fluidized bed reactor. In some embodiments, the fluidized bed reactor may include a reactor body in which a diameter may be increased stepwise or gradually from a bottom thereof. In this case, the gas-solid mixing may be enhanced.

In some embodiments, the same fluidized bed reactor may be used to recover the lithium source from the waste anode material and prepare lithium sulfide. Thus, a production efficiency may be enhanced.

In some embodiments, the lithium sulfide collector 150 may be merged with the fluidized bed reactor. A diameter of the fluidized bed reactor may be gradually increased by a specific inclination angle from the gas supplier 140 to the lithium sulfide collector 150. Accordingly, fluidization efficiency may be improved, and thus yield of lithium sulfide may be improved.

In some embodiments, a ratio of the total number of moles of lithium atoms included in the lithium source layer 130 relative to the total number of moles of sulfur atoms included in the solid sulfur layer 110 may be in a range from 1 to 3.

In some embodiments, the ratio of the total number of moles of lithium atoms included in the lithium source layer 130 relative to the total number of moles of sulfur atoms included in the solid sulfur layer 110 may be in a range from 1.2 to 2.8, from 1.4 to 2.6, or from 1.5 to 2.5. In the above range, yield of lithium sulfide may be further improved.

The reaction gas injected into the reactor 100 may include hydrogen, and may further include an inert gas such as argon, nitrogen, helium, and the like.

In some embodiments, the reaction gas may include hydrogen or a hydrogen-nitrogen mixture gas. For example, the reaction gas may include hydrogen, a hydrogen-nitrogen mixture gas, a hydrogen-argon mixture gas, etc.

Lithium sulfide may be prepared by sequentially flowing the reactive gas including hydrogen through the solid sulfur layer 110, the catalyst layer 120 and the lithium source layer 130.

In various embodiments, the reaction gas may include the hydrogen-nitrogen mixture gas, and a volume ratio of hydrogen in the hydrogen-nitrogen mixture gas may be in a range from 30 vol% or more and less than 100 vol%.

When the volume ratio of hydrogen contained in the reaction gas is less than 30%, a production time of lithium sulfide may be increased, thereby reducing efficiency.

In some embodiments, a reaction temperature by the injection of the reaction gas may be in a range from 300°C to 500°C. In some embodiments, the reaction temperature may be in a range from 300°C to 450°C.

When the reaction temperature is less than 300°C, the reaction may not be activated or an activity may become low even though the reaction gas and solid sulfur contact each other to degrade yield of lithium sulfide. Further, purity of lithium sulfide may be lowered due to side reactions.

When the reaction temperature exceeds 500°C, a flow rate of the reaction gas may become non-uniform, and the prepared lithium sulfide may be excessively agglomerated to deteriorate the yield.

In some embodiments, an injection pressure of the reaction gas may be in a range from 0.1 bar to 5 bar.

A reaction pressure may be similar to an atmospheric pressure or may be maintained to be higher than the atmospheric pressure depending on an amount of the injected reaction gas. In some embodiments, the reaction pressure may be in a range from 0.5 bar to 4 bar, or from 1 bar to 3 bar. In the above range, purity of the prepared lithium sulfide may be further improved.

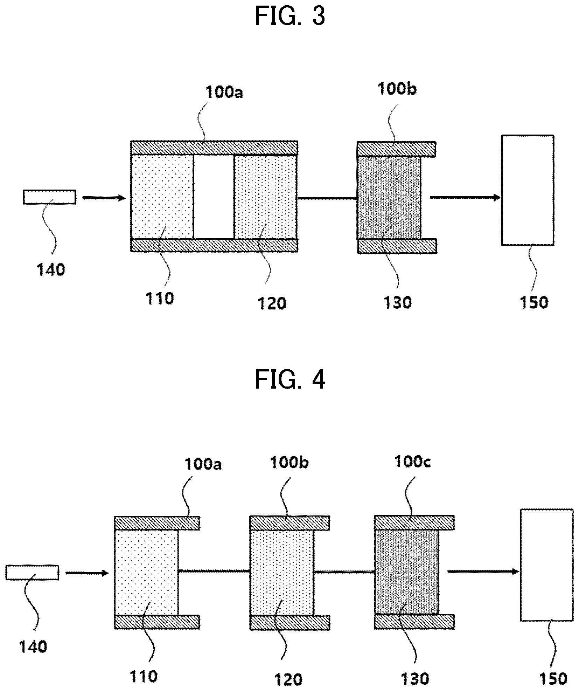

FIGS. 3 and 4 are schematic process flow-charts for describing a method of preparing lithium sulfide in accordance with some embodiments of the present disclosure.

Referring to FIG. 3, the reactor 100 may include a first reactor 100a and a second reactor 100b. Referring to FIG. 4, the reactor 100 may include a first reactor 100a, a second reactor 100b and a third reactor 100c.

The first reactor 100a, the second reactor 100b and the third reactor 100c may be the same as or different from each other, and may be the same as the reactor 100 described above.

The first reactor 100a may be connected to the gas supplier 140, and the second reactor 100b or the third reactor 100c may be connected to the lithium sulfide collector 150. The first reactor 100a, the second reactor 100b and the third reactor 100c may be connected to each other.

For example, the first reactor 100a may be connected to the second reactor 100b, and the second reactor 100b may be connected to the third reactor 100c.

A connecting method of the first reactor 100a, the second reactor 100b and the third reactor 100c is not particularly limited, and any connecting method capable of preventing leakage of the reaction gas, reactants, etc., and stably maintaining the reaction may be employed.

The first reactor 100a, the second reactor 100b and the third reactor 100c may be connected to each other to transfer the reaction gas supplied to the first reactor 100a to the second reactor 100b and/or the third reactor 100c.

The layers included in the first reactor 100a, the second reactor 100b and the third reactor 100c may be disposed in the same direction. The reaction gas may be supplied to the first reactor 100a in the single direction through the gas supplier 140. The reaction gas may be supplied in a direction toward the second reactor 100b or the third reactor 100c connected to the first reactor 100a and may form a unidirectional flow of the reaction gas from the first reactor 100a to the second reactor 100b or the third reactor 100c.

In some embodiments, the solid sulfur layer 110 and the catalyst layer 120 may be disposed in the first reactor 100a, and the lithium source layer 130 may be disposed in the second reactor 100b. For example, the solid sulfur layer 110 and the catalyst layer 120 in the first reactor 100a may contact each other or may be spaced apart from each other.

In some embodiments, the solid sulfur layer 110 may be disposed in the first reactor 100a, and the catalyst layer 120 and the lithium source layer 130 may be disposed in the second reactor 100b. For example, the catalyst layer 120 and the lithium source layer 130 in the second reactor 100b may contact or be spaced apart from each other.

After arranging the layers, the reaction gas may be supplied to sequentially contact the solid sulfur layer 110, the catalyst layer 120 and the lithium source layer 130.

In some embodiments, the solid sulfur layer 110 may be disposed in the first reactor 100a, the catalyst layer 120 may be disposed in the second reactor 100b, and the lithium source layer 130 may be disposed in the third reactor 100c.

Even when the solid sulfur layer 110, the catalyst layer 120 and the lithium source layer 130 are present in physically spaced reactors, lithium sulfide may be efficiently produced while suppressing impurities according to the unidirectional flow of reaction gas.

In some embodiments, the lithium sulfide obtained by the lithium sulfide collecting unit 150 may have high purity (e.g., 95% or more, 98% or more, or 99% or more) even when an additional purification is not further performed. The reaction gas may be injected in the single direction to pass through the catalyst layer 120 located between the solid sulfur layer 110 and the lithium source layer 130, so that the high purity lithium sulfide may be prepared even when the purification is omitted.

In various embodiments, a solvent may not be used in the arrangement of the solid sulfur layer 110, the catalyst layer 120 and the lithium source layer 130. For example, the solid sulfur layer 110, the catalyst layer 120 and the lithium source layer 130 may not include a solvent. For example, an organic solvent such as isopropyl alcohol, hexane, toluene, dimethylformamide, N-methylcaprolactam, N-methylpyrrolidone etc., may not be used. Accordingly, an additional residual solvent treatment may be omitted after the preparation of lithium sulfide, thus further enhancing the eco-friendly characteristics of the inventive process.

Hereinafter, embodiments of the present disclosure are described in more detail with reference to experimental examples.

### Example 1

A solid sulfur, a catalyst comprising an active metal on a support (active metal: NiMo/support: Al₂O₃) and lithium hydroxide monohydrate (LiOH·H₂O) were sequentially filled in a reactor. A hydrogen (100 vol%) gas was injected in a single direction into the reactor to sequentially contact the solid sulfur layer, the NiMo/Al₂O₃ catalyst layer and the lithium hydroxide layer in the recited order. While injecting the hydrogen gas, the reaction was performed for 5 hours while maintaining a reaction pressure at 2 bar and a reaction temperature at 400°C. Thereafter, the reactor was moved to a Glove box, and a product located at a top of the reactor was separated to obtain lithium sulfide.

### Example 2

The reaction was proceeded by the same method as that in Example 1, except that the reaction temperature was changed to 350°C.

### Example 3

The reaction was proceeded by the same method as that in Example 1, except that the reaction temperature was changed to 300°C.

### Example 4

The reaction was proceeded by the same method as that in Example 1, except that a mixed gas of hydrogen (50 vol%)/nitrogen (50 vol%) was used as the reaction gas.

### Comparative Example 1

The reaction was proceeded by the same method as that in Example 1, except that lithium hydroxide, the NiMo/Al₂O₃ catalyst and the solid sulfur were sequentially filled in the reactor so that the reaction gas sequentially contacted the lithium hydroxide layer, the catalyst layer and the solid sulfur layer.

### Comparative Example 2

The reaction was proceeded by the same method as that in Example 1, except that the solid sulfur and lithium hydroxide were only used while omitting the catalyst.

### Comparative Example 3

The reaction was proceeded by the same method as that in Example 1, except that the reaction temperature was changed to 120°C.

### Comparative Example 4

The reaction was proceeded by the same method as that in Example 1, except that the reaction temperature was changed to 250°C.

### Comparative Example 5

The reaction was proceeded by the same method as that in Example 1, except that the reaction temperature was changed to 600°C.

### Experimental Example

An X-ray diffraction (XRD) analysis was measured for the products obtained from the above-described Examples and Comparative Examples, and a crystal structure was analyzed by a Rietveld refinement.

The analysis results are also shown in Table 1 below.

**[Table 1]**

| | content in product (wt%) | | | Note |
|---|---|---|---|---|
| | lithium sulfide (Li₂S) | lithium hydroxide (LiOH) | other sulfates | |
| Example 1 | 100 | - | - | |
| Example 2 | 100 | - | - | |
| Example 3 | 100 | - | - | |
| Example 4 | 100 | - | - | |
| Comparative Example 1 | No reaction occurred | | | |
| Comparative Example 2 | 53 | 3 | 44 | |
| Comparative Example 3 | 14 | 86 | - | |
| Comparative Example 4 | 72 | 28 | - | |
| Comparative Example 5 | 98.4 | 1.6 | - | sample was hardened, and could not be recovered |

Referring to Table 1, in the Examples, the reaction gas sequentially contacted the solid sulfur layer, the catalyst layer and the lithium hydroxide layer to obtain lithium sulfide. Additionally, the high-purity lithium sulfide was obtained in the reaction temperature range of 300°C to 450°C.

In Comparative Example 1 where the reaction gas was not in a sequential contact with the solid sulfur layer, the catalyst layer and the lithium hydroxide layer, no reaction occurred. In Comparative Example 2 where the catalyst was not used, lithium sulfide was prepared, but the purity was lowered and a lithium compound (Li₂S₂O₄) was produced as a by-product.

In Comparative Example 3 where the reaction temperature was low, the reaction did not substantially occur and the content of lithium sulfide was less than 20 wt%. In Comparative Example 4 where the reaction temperature was less than 300°C, the content of lithium sulfide was less than 75 wt%. In Comparative Example 5 where the reaction temperature was increased, the content of lithium sulfide was 90 wt% or more, but the lithium sulfide was hardened in the lithium sulfide collector to cause a loss in the recovery of lithium sulfide. Further, the reaction temperature was excessive and unreacted lithium hydroxide remained.

Although the invention has been described with reference to specific embodiments, many other embodiments and variations thereof may be envisioned by those skilled in the art of the present disclosure which do not depart from the scope of the disclosed embodiments as defined in the appended claims. Furthermore, the embodiments may be combined to form additional embodiments.

## Claims

1. A method of preparing lithium sulfide, the method comprising:
sequentially arranging a solid sulfur layer, a catalyst layer and a lithium source layer in a reactor; and
injecting a reaction gas into the reactor in a single direction to sequentially contact the solid sulfur layer, the catalyst layer, and the lithium source layer in this order to produce lithium sulfide.

2. The method of claim 1, wherein the reaction gas is injected into one end portion of the reactor and sequentially passes through the solid sulfur layer, the catalyst layer and the lithium source layer.

3. The method of claims 1 or 2, further comprising collecting lithium sulfide from the other end portion of the reactor.

4. The method of anyone of claims 1 to 3, wherein the catalyst layer includes an active metal and a support for the active metal.

5. The method of claim 4, wherein the support includes alumina, and the active metal includes at least one of Ni, Mo, Co and W.

6. The method of anyone of claims 1 to 5, wherein the lithium source layer includes at least one of lithium hydroxide and lithium oxide.

7. The method of claim 6, wherein a lithium source included in the lithium source layer is recovered from a waste cathode material of a lithium secondary battery.

8. The method of anyone of claims 1 to 7, wherein a ratio of the total number of moles of lithium atoms included in the lithium source layer relative to the total number of moles of sulfur atoms included in the solid sulfur layer is in a range from 1 to 3.

9. The method of anyone of claims 1 to 8, wherein the reaction gas includes hydrogen or a hydrogen-nitrogen mixture gas.

10. The method of anyone of claims 1 to 9, wherein the reaction gas includes a hydrogen-nitrogen mixture gas, and a volume ratio of hydrogen in the hydrogen-nitrogen mixture gas is in a range from 30 vol% or more and less than 100 vol%.

11. The method of anyone of claims 1 to 10, wherein (a) a reaction temperature in the reactor is in a range from 300°C to 500°C; and/or (b) a reaction pressure in the reactor is in a range from 0.1 bar to 5 bar.

12. The method of anyone of claims 1 to 12, wherein a reactor includes a first reactor and a second reactor.

13. The method of claim 12, wherein the solid sulfur layer and the catalyst layer are disposed in the above first reactor, and the lithium source layer is disposed in the second reactor, and
the reaction gas is supplied from the first reactor to the second reactor to sequentially contact the solid sulfur layer, the catalyst layer and the lithium source layer.

14. The method of anyone of claims 1 to 12, wherein the reactor includes a first reactor, a second reactor and a third reactor.

15. The method of claim 14, wherein the solid sulfur layer is disposed in the first reactor, the catalyst layer is disposed in the second reactor, and the lithium source layer is disposed in the third reactor, and
the reaction gas is supplied from the first reactor to the second reactor and then to the third reactor to sequentially contact the solid sulfur layer, the catalyst layer and the lithium source layer.
